# EUROPÄISCHE PATENTANMELDUNG

(11) **EP 3 251 927 A1**
(43) Veröffentlichungstag der Anmeldung: **06.12.2017**
(21) Anmeldenummer: 17170423.2
(22) Anmeldetag: 10.05.2017
(51) Int. Cl.: B62J 11/00, A45F 3/16

(54) **TRINKFLASCHENHALTERUNG SOWIE TRINKFLASCHE**

(30) Priorität: 31.05.2016 DE 102016209466
(71) Anmelder: Canyon Bicycles GmbH, 56073 Koblenz (DE)
(72) Erfinder: Vogt, Stephan, 56073 Koblenz (DE); Hahn, Sebastian, 58791 Werdohl (DE)
(74) Vertreter: dompatent von Kreisler Selting Werner - Partnerschaft von Patent- und Rechtsanwälten mbB

(57) **Zusammenfassung**

Eine Trinkflaschenhalterung weist ein Befestigungselement (10) zur Befestigung an einem Fahrradrahmen auf. Mit dem Befestigungselement (10) ist ein Bodenhalteelement (22) und ein Fixierelement (14) verbunden, insbesondere einstückig ausgebildet. Das Bodenhalteelement (22) weist einen insbesondere stiftförmig ausgebildeten Ansatz auf, der bei fixierter Trinkflasche in eine am Boden (34) der Trinkflasche (28) vorgesehene Ausnehmung (36) eingreift.

## Beschreibung

Die Erfindung betrifft eine Trinkflaschenhalterung, insbesondere zur Befestigung am Fahrradrahmen. Ferner betrifft die Erfindung eine Trinkflasche, insbesondere eine Fahrrad-Trinkflasche.

Zur Befestigung von Trinkflaschen, insbesondere am Fahrradrahmen, sind zumeist aus Metall hergestellte Trinkflaschenhalter bekannt. Diese Trinkflaschenhalter weisen einen entsprechend gebogenen Metalldraht auf, um eine Trinkflasche klemmend zu halten. Derartige Trinkflaschenhalterungen weisen ein Befestigungselement zur Befestigung des Trinkflaschenhalters am Fahrradrahmen, am Fahrradsattel oder dergleichen auf. Zur Befestigung am Fahrradrahmen ist es bekannt, dass das Befestigungselement mit Hilfe zweier Schrauben in einem genormten Abstand von üblicherweise 64 mm am Sitzrohr oder Unterrohr des Fahrradrahmens angebracht wird. Die Trinkflasche wird von vorne bzw. oben in den Trinkflaschenhalter eingesteckt. Derartige Trinkflaschenhalter sind inzwischen sehr weit verbreitet und beispielsweise in US D 264,954 beschrieben.

Beim Einsetzen und Entnehmen der Flasche aus dem Trinkflaschenhalter erfolgt ein elastisches Verformen sowohl der üblicherweise aus Kunststoff hergestellten Flasche als auch des Trinkflaschenhalters. Die Entnahme erfolgt hierbei im Wesentlichen in Längsrichtung des Trinkflaschenhalters, beispielsweise parallel zum Unterrohr oder Sitzrohr. Da sich die Bauformen von Fahrradrahmen in den letzten Jahren insbesondere derart geändert haben, dass die Bauformen kompakter werden und beispielsweise zusätzlich in dem durch das Oberrohr, das Unterrohr und das Sitzrohr gebildeten Rahmendreieck bei Mountain- oder Trekkingbikes Dämpfer angeordnet sind, ist eine Entnahme der Trinkflasche in Längsrichtung häufig schwierig.

Es ist daher in EP 0 999 120 ein Trinkflaschenhalter beschrieben, um eine nicht in Längsrichtung erfolgende Entnahme zu ermöglichen. Die Entnahme erfolgt hierbei über einen beispielsweise am Unterrohr angeordneten entsprechenden Trinkflaschenhalter nicht in Längsrichtung des Unterrohrs, sondern nach oben bzw. seitlich. Auch die in EP 0 999 120 beschriebene Trinkflaschenhalterung weist hierdurch insbesondere bei vollgefederten Mountain- oder Trekkingbikes, bei denen im Rahmendreieck entsprechende Federelemente angeordnet sind, weiterhin den Nachteil auf, dass der Bauraum für die Flasche und den Trinkflaschenhalter relativ groß ist. Dies liegt beispielsweise auch darin begründet, dass moderne Mountainbikes häufig ein relativ tiefes Oberrohr aufweisen, um eine geringe Überstandhöhe zu gewährleisten.

Aufgabe der Erfindung ist es, eine Trinkflaschenhalterung zu schaffen, die bei geringem Platzbedarf ein zuverlässiges und gut handhabbares Entnehmen und Halten von Trinkflaschen gewährleistet. Ferner ist es Aufgabe der Erfindung, eine geeignete Trinkflasche zu schaffen.

Die Lösung der Aufgabe erfolgt erfindungsgemäß durch eine Trinkflaschenhalterung gemäß Anspruch 1 bzw. eine Trinkflasche gemäß Anspruch 20.

Die erfindungsgemäße Trinkflaschenhalterung, die insbesondere zur Befestigung am Fahrradrahmen, aber auch am Sattel, am Sattelrohr oder am Fahrradlenker geeignet ist, weist ein Befestigungselement auf. Mit Hilfe des Befestigungselements erfolgt eine Befestigung am Fahrradrahmen oder dergleichen. Hierbei kann das Befestigungselement zur üblichen Befestigung am Unterrohr oder Sitzrohr des Fahrradrahmens zwei Öffnungen aufweisen, um die Trinkflaschenhalterung an den hierfür vorgesehenen Gewindebohrungen am Unterrohr oder Sitzrohr zu fixieren. Zur Fixierung beispielsweise im hinteren Bereich des Sattels, am Sattelrohr oder am Lenker ist das Befestigungselement entsprechend geeignet, z.B. als Schelle ausgebildet. Mit dem Befestigungselement ist ein Bodenhalteelement zum Halten eines Flaschenbodens oder eines anderen, insbesondere im unteren Bereich der Flasche vorgesehenen Elements angeordnet. Insbesondere ist das Bodenhalteelement einstückig mit dem Befestigungselement ausgebildet. Ferner weist die Trinkflaschenhalterung ein mit dem Befestigungselement verbundenes Fixierelement zum Halten der Trinkflasche auf. Das Fixierelement ist vorzugsweise ebenfalls einstückig mit dem Befestigungselement ausgebildet, wobei es besonders bevorzugt ist, dass die gesamte Trinkflaschenhalterung aus Kunststoff hergestellt ist. Erfindungsgemäß weist das Bodenhalteelement einen Ansatz auf. Der Ansatz greift bei fixierter Trinkflasche in eine Ausnehmung der Trinkflasche ein, wobei sich diese Ausnehmung vorzugsweise am Flaschenboden befindet. Ebenso könnte das Bodenhalteelement eine Ausnehmung aufweisen, in die sodann ein an der Trinkflasche vorgesehener Ansatz eingreift, wobei der Ansatz vorzugsweise am Flaschenboden angeordnet ist.

In bevorzugter Ausführungsform ist der Ansatz stiftförmig oder stabförmig ausgebildet. Besonders bevorzugt ist es ferner, dass der Ansatz einen sphärisch ausgebildeten Endbereich aufweist. Hierbei handelt es sich um das freie Ende des Ansatzes, das in die Ausnehmung einer Trinkflasche ragt. Der Ansatz ist somit insbesondere im Endbereich ähnlich eines Kugelkopfs oder als Halbkugel ausgebildet. Dies hat in besonders bevorzugter Weiterbildung den Vorteil, dass bei einer komplementär ausgebildeten Ausnehmung insbesondere am Flaschenboden eine automatische Zentrierung erfolgt. Die Ausnehmung am Flaschenboden ist insofern ebenfalls sphärisch, insbesondere entsprechend einer Bodenhalbkugel oder dergleichen ausgebildet. Die Abmessungen, insbesondere der Durchmesser der Ausnehmung, ist vorzugsweise deutlich größer als derjenige des Ansatzes, so dass ein automatisches Zentrieren bzw. Hineingleiten des Ansatzes in die Ausnehmung erfolgt. Dies gewährleistet ein einfaches Handling. Besonders bevorzugt ist eine Ausgestaltung, bei der der Ansatz der Trinkflaschenhalterung und die insbesondere am Flaschenboden vorgesehene Ausnehmung derart ausgebildet sind, dass bei fixierter Trinkflasche der Ansatz koaxial zur Mittel- bzw. Längsachse der Trinkflasche ist.

Ebenso ist es möglich, den Ansatz hakenförmig auszubilden. Bei fixierter Trinkflasche greift der hakenförmige Ansatz ebenfalls in eine Ausnehmung der Trinkflasche ein, die wiederum bei bevorzugter Ausführungsform am Boden der Trinkflasche vorgesehen ist. Insbesondere weist die Trinkflasche einen umlaufenden Rand auf, der von dem hakenförmigen Ansatz hintergriffen wird. Besonders bevorzugt ist es hierbei, dass der Rand am Boden der Trinkflasche angeordnet ist und sich in Längsrichtung der Trinkflasche, d.h. nach unten bezogen auf den Boden der Trinkflasche erstreckt. Beim insbesondere umlaufenden Rand ist wiederum ein leichtes Einführen des hakenförmigen Ansatzes in die durch den Rand gebildete Ausnehmung möglich, so dass auch bei dieser Ausführungsform die Handhabung einfach ist.

Zusätzlich zu dem am Bodenelement vorgesehenen Ansatz, der mit einer Ausnehmung der Trinkflasche zusammenwirkt bzw. einer am Bodenelement des Trinkflaschenhalteelements vorgesehenen Ausnehmung, die mit einem Ansatz der Trinkflasche zusammenwirkt, weist die Trinkflaschenhalterung ein Fixierelement auf. Dieses dient zum Fixieren der Trinkflasche, so dass diese insbesondere auch beim Überfahren unebenen Geländes sicher gehalten ist. Das Fixierelement bewirkt hierbei insbesondere ein reib- und/ oder formschlüssiges Halten der Trinkflasche. Beispielsweise kann das Fixierelement einen klettartigen Verschluss, eine Schnappverbindung oder eine Rastverbindung aufweisen. Auch kann als Fixierelement ein Magnetverschluss vorgesehen sein.

Besonders bevorzugt ist es, dass das Fixierelement mindestens ein Rastelement aufweist. Hierdurch ist auf einfache Weise ein Lösen bzw. Entnehmen der Flasche aus dem Trinkflaschenhalter möglich.

Das Fixierelement, das in bevorzugter Ausführungsform mindestens ein Rastelement aufweist, wirkt vorzugsweise mit einem Flaschenhals zusammen. Hierbei ist es bevorzugt, dass das Fixierelement den Flaschenhals teilweise, insbesondere um mehr als 180° umgreift um ein sicheres Halten der Trinkflasche zu gewährleisten. Das Vorsehen des Fixierelements im Bereich des Flaschenhalses hat ferner den Vorteil, dass ein Verschieben bzw. Verrutschen der Trinkflasche in Längsrichtung des Trinkflaschenhalters vermieden ist. Hierdurch ist auch ein Herausrutschen des Ansatzes aus einer Ausnehmung am Trinkflaschenboden vermieden.

In besonders bevorzugter Ausführungsform weist das Fixierelement zwei insbesondere einander gegenüberliegende Rastarme auf. Zumindest einer der beiden, insbesondere beide Rastarme sind hierbei elastisch federnd ausgebildet. Bevorzugt ist es, dass zumindest einer der Rastarme einen teilweise ringförmig ausgebildeten Abschnitt aufweist. An diesem ringförmig ausgebildeten Abschnitt kann die Trinkflasche in fixiertem Zustand angeordnet werden.

Des Weiteren ist es möglich, ein Entriegelelement vorzusehen. Das Entriegelelement dient zum Ent- und Verriegeln der Trinkflasche. Hierdurch kann ein zusätzliches Fixieren der Trinkflasche gewährleistet werden. Beispielsweise kann durch eine entsprechende Verriegelung in besonders unebenem Gelände zusätzlich sichergestellt werden, dass die Trinkflasche sich nicht aus der Trinkflaschenhalterung löst. Hierbei ist das Ent- und Verriegelungselement vorzugsweise derart ausgebildet, dass es nur optional verwendet werden kann. Das Ent- und Verriegelungselement könnte beispielsweise als verschwenk- oder verschiebbarer Riegel vorgesehen sein. Dieser ist insbesondere im Bereich des Fixierelements und besonders bevorzugt der einander gegenüberliegenden Rastarme angeordnet. Der entsprechende Riegel kann wiederum mit Rastelementen oder dergleichen versehen sein, so dass das Ent- und Verriegelungselement vorzugsweise in beiden Endstellungen rastend gehalten ist.

Bei erfindungsgemäßer Ausgestaltung der Trinkflaschenhalterung ist es möglich, die Trinkflasche derart im Halter zu fixieren, dass der Ansatz des Bodenhalteelements der Trinkflaschenhalterung in die insbesondere am Boden der Trinkflasche vorgesehene Ausnehmung eingeführt wird, wobei hierbei in besonders bevorzugter Ausführungsform eine automatische Zentrierung erfolgt. Die Trinkflasche muss sodann nur noch seitlich verkippt werden, um mit dem Fixierelement verbunden zu werden, bei dem es sich in bevorzugter Ausführungsform um ein Rastelement handelt. Der Platzbedarf der Trinkflaschenhalterung ist insbesondere einschließlich der Bedienung insofern deutlich geringer gegenüber herkömmlichen Systemen, da die Trinkflasche nicht in Längsrichtung der Trinkflaschenhalterung entnommen werden muss. Auch eine Entnahme, beispielsweise nach oben senkrecht zum Unterrohr, wie bei der Trinkflaschenhalterung gemäß EP 0 999 120 erforderlich, ist nicht zwingend nötig. Bei der erfindungsgemäßen Trinkflaschenhalterung kann auch eine seitliche Entnahme erfolgen.

Die vorstehend beschriebene Trinkflaschenhalterung, die vorzugsweise zur Aufnahme einer Trinkflasche geeignet ist, ist in bevorzugter Ausführungsform derart ausgebildet, dass das Befestigungselement, das Bodenhalteelement und das Fixierelement in einer Ebene liegen. Bei fixierter Trinkflasche liegt in derselben Ebene vorzugsweise auch die Mittel- bzw. Längsachse der Trinkflasche, sofern es sich um eine rotationssymmetrische Trinkflasche handelt.

Bei einer besonders bevorzugten Weiterbildung der erfindungsgemäßen Trinkflaschenhalterung sind zwei Bodenhalteelemente und zwei Fixierelemente vorgesehen, so dass eine Trinkflaschenhalterung zwei Trinkflaschen aufnimmt. Diese sind in fixiertem Zustand vorzugsweise nebeneinander angeordnet. Bei einer Befestigung der Trinkflaschenhalterung an einem Unterrohr sind die beiden Trinkflaschen sodann nicht vollständig oberhalb des Unterrohrs, sondern nebeneinander angeordnet. Hierbei ist es möglich, den erforderlichen Bauraum in diesem Beispiel senkrecht zum Unterrohr zu verringern. Herkömmliche Trinkflaschen weisen einen Durchmesser von ca. 74 mm auf. Beim Vorsehen von zwei Trinkflaschen, die nebeneinander angeordnet sind, ist es möglich, Trinkflaschen mit geringerem Durchmesser vorzusehen. Das Nebeneinanderanordnen von zwei Trinkflaschen führt zwar dazu, dass die Breite größer ist, wobei selbst bei einer gemeinsamen Breite von ca. 120 mm weiterhin sichergestellt ist, dass beispielsweise die Trinkflaschen nicht die Tretkurbel oder den Bereich, in dem sich die Unterschenkel des Fahrradfahrers bewegen, beeinträchtigen.

Bei dieser bevorzugten Weiterbildung der Trinkflaschenhalterung für zwei Trinkflaschen ist es bevorzugt, dass die beiden Bodenhalteelemente sowie auch die beiden Fixierelemente wie vorstehend beschrieben vorteilhaft weitergebildet sind.

Ein Bodenhalteelement, ein dazugehöriges Fixierelement und das gemeinsame Befestigungselement bilden in bevorzugter Ausführungsform eine erste Ebene aus. Das zweite Bodenhalteelement sowie das dazugehörige Fixierelement und das gemeinsame Befestigungselement bilden vorzugsweise eine zweite Ebene aus. Bevorzugt ist es, dass diese beiden Ebenen einen Winkel von 90 - 160° zueinander aufweisen. Bevorzugt ist es ferner, dass, sofern es sich um rotationssymmetrische Trinkflaschen handelt, die Längsachsen der beiden Trinkflaschen jeweils in einer der beiden Ebenen angeordnet sind.

Bei der Trinkflaschenhalterung für zwei Trinkflaschen ist diese vorzugsweise derart ausgestaltet, dass die beiden Trinkflaschen in der Halterung im Wesentlichen parallel zueinander angeordnet sind. Ein Abstand zwischen den beiden Trinkflaschen, in deren Längsrichtung bleibt somit im Wesentlichen konstant.

Des Weiteren weist die Trinkflaschenhalterung für zwei Trinkflaschen den Vorteil auf, dass diese aufgrund ihrer Ausgestaltung insbesondere am Unterrohr oder am Sattelrohr eines Fahrradrahmens angeordnet werden kann. Dies ist insbesondere bei bekannten Trinkflaschenhalterungen für zwei Trinkflaschen nicht möglich. Diese sind am Sattel oder an der den Sattel haltenden Sattelstütze befestigt und in Fahrtrichtung hinter dem Sattel angeordnet, wie beispielsweise aus US 2010/0237118 bekannt.

Bei einer bevorzugten Weiterbildung der Trinkflaschenhalterung, insbesondere der Trinkflaschenhalterung für zwei Flaschen, sind das Bodenhalteelement und das Fixierelement, insbesondere die beiden Bodenhalteelemente und die beiden Fixierelemente, durch einen Verbindungssteg miteinander verbunden. Der Verbindungssteg ist vorzugsweise parallel zum Befestigungselement angeordnet. Bei einer derartigen Trinkflaschenhalterung für zwei Trinkflaschen ist es bevorzugt, dass der Verbindungssteg zwischen den beiden fixierten Trinkflaschen angeordnet ist. Durch einen Verbindungssteg kann die Stabilität der Trinkflaschenhalterung verbessert werden. Des Weiteren ist es möglich, an dem Verbindungssteg weitere Zusatzelemente zu befestigen. Hierbei handelt es sich beispielsweise um Werkzeug, eine Werkzeugtasche, eine Pumpe oder dergleichen. Hierzu ist es bevorzugt, an dem Verbindungssteg Halteelemente, wie Klammern oder dergleichen, vorzusehen. Die Klammern können mit einem Gummiring verbunden sein, der beispielsweise eine Pumpe hält.

Ferner betrifft die Erfindung eine Trinkflasche, die insbesondere für den vorstehend beschriebenen Trinkflaschenhalter geeignet ist. Die Trinkflasche weist einen Aufnahmebehälter mit einem Bodenelement und einem Deckelelement auf. Das Bodenelement weist eine Ausnehmung zur Aufnahme eines Ansatzes der Trinkflaschenhalterung auf. Die Ausnehmung ist insbesondere als Mulde ausgebildet, wobei es besonders bevorzugt ist, dass bei einer insbesondere rotationssymmetrisch ausgebildeten Trinkflasche der Extrempunkt der Mulde auf der Rotations- bzw. Längsachse der Flasche angeordnet ist. Hierdurch ist das Handling stark vereinfacht. Des Weiteren ist es bevorzugt, dass die Ausnehmung zumindest teilweise sphärisch ausgebildet ist. Insbesondere bei einer rotationssymmetrischen Ausnehmung ist es bevorzugt, dass der zentrale mittlere Bereich sphärisch ausgebildet ist. Hierdurch erfolgt beim Einsetzen der Trinkflasche in die Trinkflaschenhalterung stets automatisch eine Zentrierung.

Das Bodenelement ist insbesondere einstückig mit dem Aufnahmebehälter ausgebildet. Das Deckelelement ist vorzugsweise durch eine Schraubverbindung, eine Klemmverbindung oder dergleichen lösbar mit dem Aufnahmebehälter verbunden, so dass dieser auf einfache Weise gereinigt und befüllt werden kann.

Das Deckelelement weist insbesondere einen Flaschenhals auf. Mit dem Flaschenhals ist eine Trinköffnung verbunden, die beispielsweise durch ein insbesondere in Längsrichtung verschiebbares Element öffen- und schließbar ist. Der Flaschenhals, der insbesondere ein Teil des Deckelelements ist, dient insbesondere zur Verbindung mit dem Fixierelement der Flaschenhalterung, insbesondere den flexiblen Rastarmen.

Bei einer alternativen Ausgestaltung der Trinkflasche ist die am Bodenelement vorgesehene Ausnehmung derart ausgestaltet, dass sie von einem insbesondere vollständig umgebenen Rand umgeben ist. Diese Ausführungsform ist vorzugsweise zur Verbindung mit einem hakenförmigen Ansatz der Trinkflaschenhalterung geeignet.

Des Weiteren betrifft die Erfindung ein Trinkflaschensystem mit einer Trinkflaschenhalterung wie vorstehend beschrieben und mindestens einer Trinkflasche wie vorstehend beschrieben.

Nachfolgend wird die Erfindung anhand bevorzugter Ausführungsformen unter Bezugnahme auf die anliegenden Zeichnungen näher erläutert.

Es zeigen:
- Fig. 1: eine schematische perspektivische Ansicht einer Trinkflaschenhalterung für zwei Trinkflaschen,
- Fig. 2: die in Fig. 1 darstellte Trinkflaschenhalterung zusammen mit Trinkflaschen,
- Fig. 3: eine schematische Seitenansicht einer Trinkflaschenhalterung mit Trinkflasche,
- Fig. 4: eine weitere bevorzugte Ausführungsform eines Trinkflaschenhalters mit einer Trinkflasche,
- Fig. 5: eine schematische perspektivische Ansicht einer weiteren Ausführungsform einer Trinkflaschenhalterung für zwei Trinkflaschen, und
- Fig. 6: eine schematische Schnittansicht durch einen Verbindungssteg der in Fig. 5 dargestellten Trinkflaschenhalterung.

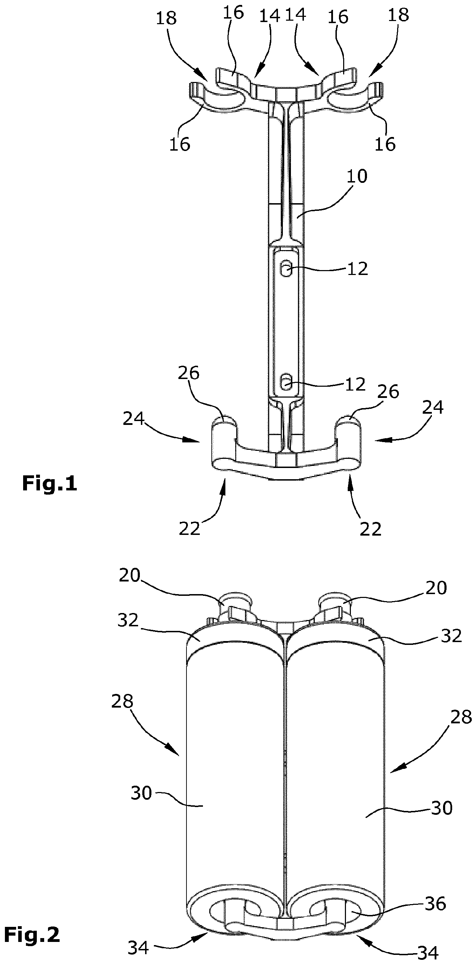

Eine bevorzugte Ausführungsform der Trinkflaschenhalterung für zwei Trinkflaschen (Fig. 1 und 2) weist ein Befestigungselement 10 auf. Dieses ist länglich und stegartig ausgebildet. Das Befestigungselement 10 weist zwei Öffnungen 12 auf. Diese dienen zur Fixierung beispielsweise an einem Unterrohr oder einem Sitzrohr eines Fahrradrahmens mittels Schrauben. Die beiden Befestigungsöffnungen 12 sind hierbei in dem normierten Abstand von insbesondere 64 mm angeordnet.

Mit dem Befestigungselement 10 insbesondere einstückig aus Kunststoff ausgebildet sind zwei Fixierelemente 14 verbunden. Die Fixierelemente 14 weisen im dargestellten Ausführungsbeispiel jeweils zwei elastische Rastarme 16 auf. Die beiden Rastarme 16 bilden eine Einstecköffnung 18 aus. Durch die Einstecköffnung 18 wird ein Flaschenhals 20 (Fig. 2) zur Fixierung eingefügt. Beim Einfügen des Flaschenhalses 20 erfolgt ein Auseinanderdrücken der beiden Rastarme 16, die sodann den Flaschenhals 20 umgreifen und hierdurch fixieren.

Den Fixierelementen 14 gegenüberliegend sind zwei Bodenhalteelemente 22 mit dem Befestigungselement verbunden, insbesondere einstückig ausgebildet. Die Bodenhalteelemente 22 weisen einen im dargestellten Ausführungsbeispiel jeweils stiftförmig ausgebildeten Ansatz 24 auf. Die Ansätze 24 weisen in Richtung der Fixierelemente 14. Die beiden stiftförmigen Ansätze 24 weisen an ihrem freien Ende ein sphärisches, insbesondere halbkugelförmiges freies Ende 26 auf.

Die Mitte der Fixierelemente 14 sowie die Mitte der Bodenhalteelemente 22 bilden jeweils zusammen mit dem Befestigungselement 10 zwei Ebenen aus bzw. liegen in zwei Ebenen. Diese Ebenen gehen jeweils durch eine Längsachse des Befestigungselements, die im dargestellten Ausführungsbeispiel durch die beiden Befestigungsöffnungen 12 verläuft. Diese beiden Ebenen weisen im dargestellten Ausführungsbeispiel einen Winkel von ca. 150 - 160° auf.

Die beiden Fahrradflaschen 28 (Fig. 2) sind identisch ausgebildet. Der Flaschenhals 20 ist Teil eines beispielsweise durch Schrauben mit einem Aufnahmebehälter 30 verbundenen Deckelelements 32. Dem Deckelelement 32 ist ein insbesondere einstückig mit dem Aufnahmebehälter 30 verbundenes Bodenelement 34 gegenüberliegend vorgesehen. Das Bodenelement 34 weist eine mittige zentrale Öffnung 36 auf. Im dargestellten Ausführungsbeispiel ist die Trinkflasche 28 rotationssymmetrisch ausgebildet. Die insbesondere als Mulde ausgebildete Öffnung 36 weist einen zumindest im zentralen Bereich sphärischen Raum auf. Hierdurch erfolgt automatisch eine Zentrierung der Trinkflasche 28 beim Einsetzen in den Trinkflaschenhalter auf dem Ansatz 24.

Zum Herausnehmen einer Trinkflasche 28 aus der Halterung wird diese gekippt, so dass der Flaschenhals 20 aus der Öffnung 18 zwischen den beiden Rastarmen 16 herausgeführt wird. Hierbei ist ein seitliches Herauskippen möglich, so dass der Platzbedarf äußerst gering ist. Anschließend kann die Trinkflasche 28 von dem stiftförmigen Ansatz 24 abgehoben werden. Umgekehrt erfolgt zum Fixieren der Trinkflasche 28 zunächst ein Aufsetzen der Trinkflasche auf dem stiftförmigen Ansatz 24, wobei der stiftförmige Ansatz 24 in die Mulde 36 eingefügt wird. Anschließend erfolgt ein Verkippen der Flasche nach innen, so dass der Flaschenhals 20 durch die Öffnung 18 des entsprechenden Fixierelements 14 geführt wird und sodann durch die Rastarme 16 rastend gehalten wird.

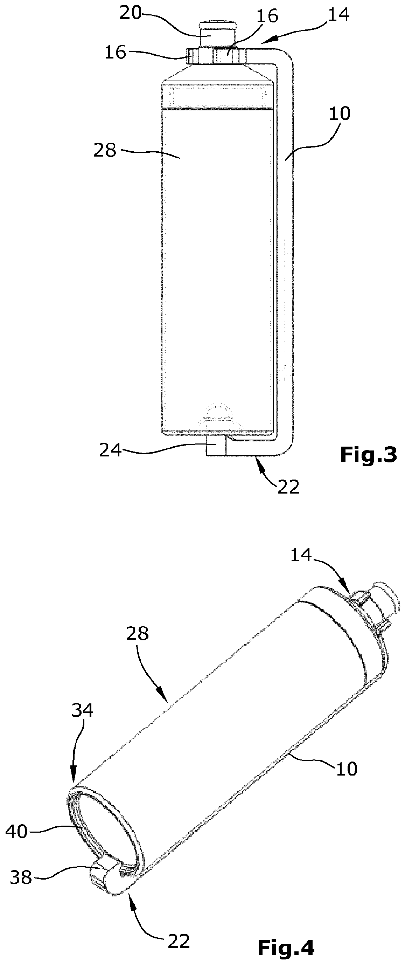

Anstelle eines für zwei Trinkflaschen 28 ausgebildeten Trinkflaschenhalters ist es auch möglich, diesen entsprechend nur für eine Trinkflasche auszubilden (Fig. 3). Die Elemente des Trinkflaschenhalters sind hierbei im Wesentlichen identisch zu den vorstehend anhand Fig. 1 beschriebenen Elementen. Entsprechende Bauteile sind daher mit den gleichen Bezugszeichen gekennzeichnet.

Das Befestigungselement 10 ist wiederum mit einem Fixierelement 14 verbunden, das zwei einander gegenüberliegene Rastarme 16 aufweist. Diese umgeben wiederum den Flaschenhals bei fixierter Trinkflasche 28. Dem Fixierelement 14 gegenüberliegend ist das Bodenelement 22 angeordnet. Dieses weist wiederum einen Ansatz 24 auf, der in die Mulde 36 der Trinkflasche ragt.

Das Bodenhalteelement 22 des Befestigungselements 10 und das Fixierelement 14 liegen in dieser Ausführungsform in einer Ebene.

Gemäß einer weiteren bevorzugten Ausführungsform, die in Fig. 4 mit nur einer Trinkflasche dargestellt ist, ist das Bodenelement 34 etwas anders ausgestaltet. Anstelle eines zentral bzw. mittig in eine Mulde der Trinkflasche eingreifenden, stiftförmigen Ansatzes 24, wie in den Fig. 1 - 3 dargestellt, ist der Ansatz als Haken 38 ausgebildet. Entsprechend ist ein Bodenelement 34 der Trinkflasche 28 mit einem umlaufenden Rand 40 versehen. Der umlaufende Rand 40 wird von dem hakenförmigen Ansatz 38 hintergriffen.

Ansonsten weist auch die in Fig. 4 dargestellte Trinkflaschenhalterung ein entsprechendes Befestigungselement 10 auf, das an der dem hakenförmigen Ansatz 38 gegenüberliegenden Seite ein Fixierelement 14 aufweist. Auch die Flasche 28 ist mit Ausnahme des etwas anders ausgestalteten Bodenbereichs identisch ausgebildet.

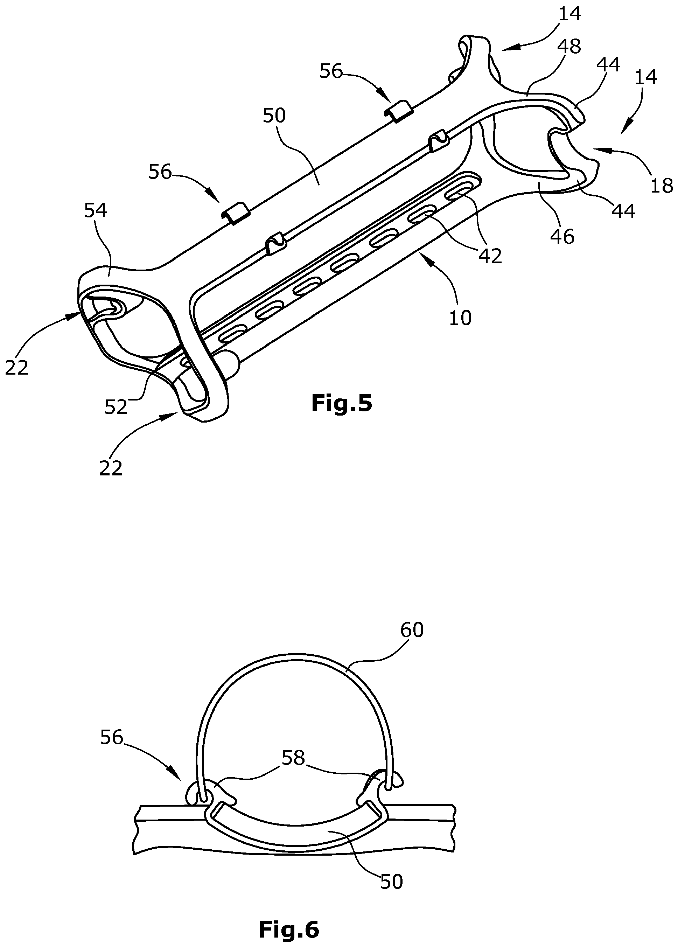

Bei einer weiteren bevorzugten Ausführungsform einer Trinkflaschenhalterung für zwei Trinkflaschen (Fig. 5) sind ähnliche und identische Bauteile wiederum mit denselben Bezugszeichen gekennzeichnet.

Auch diese Trinkflaschenhalterung weist ein Befestigungselement 10 auf, das im dargestellten Ausführungsbeispiel mehrere Langlöcher 42 beispielsweise zur Aufnahme von Schrauben zur Befestigung an einem Unterrohr oder dergleichen aufweist. Mit dem Befestigungselement 10 sind wiederum zwei Fixierelemente 14 verbunden. Diese weisen ebenfalls Rastarme 44 auf, die jedoch etwas anders ausgestaltet sind als die Rastarme 16. Die beiden Rastarme 44 bilden jedoch wiederum eine Öffnung 18 zur Aufnahme eines Flaschenhalses.

Ein Rastarm 44 ist über einen Verbindungssteg 46 jeweils mit dem Befestigungselement 10 verbunden. Der gegenüberliegende Rastarm 44 ist über einen dem Steg 46 gegenüberliegenden Steg 48 mit einem Verbindungssteg 50 verbunden.

Auf der den Fixierelementen 14 gegenüberliegenden Seite sind wiederum Bodenhalteelemente 22 vorgesehen, die ebenfalls mit dem Befestigungselement 10 verbunden ist. Zusätzlich weisen die Bodenhalteelemente 22 Stege 52, 54 auf, die mit dem Verbindungssteg 50 verbunden sind. Der Verbindungssteg 50 ist dem Befestigungselement 10 gegenüberliegend angeordnet.

Die beiden von der in Fig. 5 dargestellten Trinkflaschenhalterung aufnehmbaren Trinkflaschen werden entsprechend wie vorstehend beschrieben fixiert. In fixiertem Zustand ist der Verbindungssteg 50 zwischen den beiden Trinkflaschen angeordnet. Mit Hilfe des Verbindungssteges kann eine steifere Trinkflaschenhalterung realisiert werden. Entsprechend einer in Fig. 6 dargestellten Schnittansicht des Verbindungsstegs 50 kann dieser mit insbesondere als Klammern ausgebildeten Halteelementen 56 verbunden sein. Diese können hakenförmige Ansätze 58 zur Verbindung mit einem Gummiring 60 aufweisen. Hierdurch ist beispielswiese ein Halten einer Luftpumpe möglich.

## Patentansprüche

1. Trinkflaschenhalterung, insbesondere zur Befestigung an Fahrradrahmen, mit
einem Befestigungselement (10) zur Befestigung am Fahrradrahmen, einem mit dem Befestigungselement (10) verbundenen Bodenhalteelement (22) zum Halten einer Trinkflasche (28), und
einem mit dem Befestigungselement (10) verbundenen Fixierelement (14) zum Halten der Trinkflasche (28),
wobei das Bodenhalteelement (22) einen Ansatz (24, 38) aufweist, der bei fixierter Trinkflasche (28) in eine Ausnehmung (36) der Trinkflasche (28) eingreift.

2. Trinkflaschenhalterung nach Anspruch 1, **dadurch gekennzeichnet, dass** der Ansatz (24, 38) stiftförmig ausgebildet ist und vorzugsweise einen sphärisch ausgebildeten Endbereich (26) aufweist.

3. Trinkflaschenhalterung nach Anspruch 1 oder 2, **dadurch gekennzeichnet, dass** der Ansatz (24) und die Ausnehmung (36) derart ausgebildet sind, dass bei fixierter Trinkflasche (28) der Ansatz (24) koaxial zur Längsachse der Trinkflasche (28) ist.

4. Trinkflaschenhalterung nach einem der Ansprüche 1 - 3, **dadurch gekennzeichnet, dass** der Ansatz (38) hakenförmig ausgebildet ist.

5. Trinkflaschenhalterung nach einem der Ansprüche 1 - 4, **dadurch gekennzeichnet, dass** das Fixierelement (14) die Trinkflasche (28) durch Reib- und/ oder Formschluss fixiert und/oder das Fixierelement (14) Rastelemente (16, 44) aufweist.

6. Trinkflaschenhalterung nach einem der Ansprüche 1 - 5, **dadurch gekennzeichnet, dass** das Fixierelement (14) mit einem Flaschenhals (20) zusammenwirkt, wobei das Fixierelement (14) den Flaschenhals (20) vorzugsweise teilweise, insbesondere um mehr als 180°, umgibt.

7. Trinkflaschenhalterung nach Anspruch 6, **dadurch gekennzeichnet, dass** das Fixierelement (14) zwei einander gegenüberliegende Rastarme (16, 44) aufweist.

8. Trinkflaschenhalterung nach einem der Ansprüche 1 - 7, **gekennzeichnet durch** ein Ver- und Entriegelelement zum Ver- und Entriegeln der Trinkflasche (28).

9. Trinkflaschenhalterung nach einem der Ansprüche 1 - 8, **dadurch gekennzeichnet, dass** das Befestigungselement (10), das Bodenhalteelement (22), und das Fixierelement (14) in einer Ebene liegen.

10. Trinkflaschenhalterung nach einem der Ansprüche 1 - 9, **dadurch gekennzeichnet, dass** zwei Bodenhalteelemente (22) und zwei Fixierelemente (14) zum Halten von zwei Trinkflaschen vorgesehen sind.

11. Trinkflaschenhalterung nach Anspruch 10, **dadurch gekennzeichnet, dass** eines der beiden Bodenhalteelemente (22) und das dazugehörige Fixierelement (14) sowie das Befestigungselement (10) in einer ersten Ebene und das zweite Bodenhalteelement (22), das dazugehörige Fixierelement (14) und das insbesondere gemeinsame Befestigungselement (10) in einer zweiten Ebene angeordnet sind.

12. Trinkflaschenhalterung nach Anspruch 11, **dadurch gekennzeichnet, dass** die beiden Ebenen einen Winkel von 90 - 160° miteinander einschließen.

13. Trinkflaschenhalterung nach einem der Ansprüche 10 - 12, **dadurch gekennzeichnet, dass** die beiden fixierten Flaschen (28) zueinander parallel angeordnet sind.

14. Trinkflaschenhalterung nach einem der Ansprüche 1 - 13, **dadurch gekennzeichnet, dass** die Bodenhalteelemente (22) und die Fixierelemente (14) durch einen Verbindungssteg (50) miteinander verbunden sind, wobei der Verbindungssteg (50) vorzugsweise parallel zum Befestigungselement (10) angeordnet ist.

15. Trinkflaschenhalterung nach Anspruch 14, **dadurch gekennzeichnet, dass** der Verbindungssteg (50) bei zwei fixierten Trinkflaschen (28) zwischen diesen angeordnet ist und/oder dass der Verbindungssteg (50) mindestens ein Halteelement (56) zum Fixieren eines Zusatzelementes aufweist.

16. Trinkflasche, insbesondere für einen Trinkflaschenhalter nach einem der Ansprüche 1 - 15, mit einem Aufnahmebehälter (30) mit einem Bodenelement (34) und einem Deckelelement (32), wobei das Bodenelement (34) eine Ausnehmung (36) zur Aufnahme eines Ansatzes (24) der Trinkflaschenhalterung aufweist.

17. Trinkflasche nach Anspruch 16, **dadurch gekennzeichnet, dass** die Ausnehmung (36) als Mulde ausgebildet ist und/oder dass die Ausnehmung (36) zumindest in einem Bereich sphärisch ausgebildet ist.

18. Trinkflasche nach Anspruch 16, **dadurch gekennzeichnet, dass** das Bodenelement (34) einen die Ausnehmung insbesondere vollständig umgebenden Rand (40) aufweist, der vorzugsweise mit einem hakenförmigen Ansatz (38) der Trinkflaschenhalterung zusammenwirkt.

19. Trinkflasche nach einem der Ansprüche 16 - 18, **dadurch gekennzeichnet, dass** das Deckelelement (32) einen Flaschenhals (20) aufweist.

20. Trinkflaschensystem mit einer Trinkflaschenhalterung nach einem der Ansprüche 1 - 15 und mindestens einer Trinkflasche nach einem der Ansprüche 16 - 19.
